# EUROPEAN PATENT APPLICATION

(11) **EP 2 527 644 A2**
(43) Date of publication of application: **28.11.2012**
(21) Application number: 12165903.1
(22) Date of filing: 27.04.2012
(51) Int. Cl.: F03D 7/02, F03D 1/06

(54) **A wind turbine and an associated control method**

(30) Priority: 29.04.2011 DK 201170210
(71) Applicant: Envision Energy (Denmark) ApS, 8600 Silkeborg (DK)
(72) Inventor: Grabau, Peter, 6000 Kolding (DK); Friedrich, Michael, 8600 Silkeborg (DK)
(74) Representative: Gregersen, Niels Henrik

(57) **Abstract**

A partial pitch wind turbine (100) and an associated control method are described wherein the wind turbine blade (108) comprises an inner blade section (110a)designed as a stall-controlled blade and an outer blade section (110b) designed as a pitch-controlled blade. During operation of the wind turbine, the outer blade sections (110b) are pitched out of the wind to reduce the lift force generated in the outer blade sections, thereby reducing the blade root moments due to reduced moment arms. Meanwhile, the inner blade sections (110a)continually produce increasing power output for increasing wind speed, thereby allowing for nominal power output to be maintained while effectively de-rating the outer blade sections.

## Description

### Field of the Invention

The present invention relates to a wind turbine and a method of controlling such a wind turbine to reduce fatigue loads in the wind turbine.

### Background of the Invention

During wind turbine operation, significant loads are experienced at the root ends of the wind turbine blades as the blades rotate under operation from aerodynamic forces. Such fatigue loads produce considerable stresses and strains in the wind turbine structure, requiring significant design limitations regarding the strength of the materials used in turbine construction, reinforcement, etc. Accordingly, it is of interest to develop particular wind turbine designs which can reduce such loads, providing for reduced design limitations for the overall turbine construction.

One particular wind turbine blade construction is a partial pitch wind turbine blade. A partial pitch wind turbine comprises a plurality of wind turbine blades having inner and outer blade sections. The outer blade sections are pitchable relative to the inner blade sections, such that the output power of the wind turbine can be controlled to maintain rated power output for different wind speeds. Examples of partial pitch wind turbines include the Danish Nibe A wind turbine, and the MOD-2 wind turbine developed by NASA.

In the patent literature, German patent DE 917540 discloses a partial pitch wind turbine rotor for generating a nominal power output for wind speeds between a first wind speed and a second wind speed.

In the prior art, partial pitch rotor blades can be operated relatively unpitched, and the outer blade sections can be pitched to keep output power production of the outer blade sections at a constant level. However, such a process results in the wind turbine experiencing significant fatigue loads and maximum loads during normal operation, for example blade root loads generated at the root end of the wind turbine blades.

It is an object of the invention to provide a wind turbine design and an associated control method which provides for reduced loads during operation of the wind turbine.

It is an object of the invention to provide a wind turbine design and an associated control method which allows for a shift or a discontinuity in the contribution of moments to the blade root loads from an outer blade section that is pitchable at a certain wind speed and at the same time make the

It is an object of the invention to provide for a partial pitch blade that allows for a smoother power curve and provides for a more predictable operation of the wind turbine blade.

### Summary of the Invention

Accordingly, there is provided a partial pitch wind turbine for generating a nominal output power for wind speeds above a first nominal wind speed WS1, the wind turbine comprising:
a wind turbine tower;
a nacelle provided at the top of said tower;
a rotor hub rotatably mounted at said nacelle; and
at least two partial pitch rotor blades of at least 35 metres length mounted to said rotor hub at the root end of said blades, said rotor blades comprising an inner blade section mounted to said rotor hub and an outer blade section pitchable relative to said inner blade section, the inner blade section having a blade profile for a stall-controlled aerodynamic blade and an associated power capture profile, and the outer blade section having a blade profile for a pitch-controlled aerodynamic blade and an associated power capture profile,
wherein said wind turbine is operable to generate nominal output power at WS1 when said outer blade sections are unpitched relative to said inner blade sections,
wherein the wind turbine further comprises a controller operable to pitch said outer blade sections out of the wind to reduce the power capture of said outer blade sections for wind speeds above WS1, to reduce the rate of increase or the root moments at the root end of said partial pitch blades

Thereby the wind turbine is configured to obtain nominal power production for increasing wind speeds and configured so that the captured power can be kept at a nominal rate with a less relative increase in the root moments at the root of the partial pitch blades, thereby reducing the over all loads on the wind turbine than would have been the case with a wind blade based on a configuration known from the prior art.

The wind turbine consequently has an inner blade section that increase power capture for wind speeds beyond WS1, where the outer blade section decrease it's power capture. Thereby providing a blade configuration that shift contributions of moments from the outer blade section to the inner blade section.

The total power capture contribution relative to the root moment contribution according to the invention will be improved compared the prior art. More power per root moment will be transferred from the inner section relative than from the outer section as compared to the configuration known in prior art.

According to an alternative embodiment, the partial pitch wind turbine has inner blade sections that are designed to enter stall at a second wind speed greater than or approximately equal to WS2, which is greater than WS1 and said inner blade sections are operable to provide increasing power capture for increasing wind speeds between WS1 and WS2.

Thereby the wind turbine will have an inner section that by stall will start to decrease its power caption.

According to a further aspect of the invention, there is provided a partial pitch wind turbine for generating a nominal output power for wind speeds between a first nominal wind speed WS1 and a second nominal wind speed WS2, where WS2 is greater than WS1, the wind turbine comprising:
a wind turbine tower;
a nacelle provided at the top of said tower;
a rotor hub rotatably mounted at said nacelle; and
at least two partial pitch rotor blades of at least 35 metres length mounted to said rotor hub at the root end of said blades, said rotor blades comprising an inner blade section mounted to said rotor hub and an outer blade section pitchable relative to said inner blade section, the inner blade section having a blade profile for a stall-controlled aerodynamic blade, and the outer blade section having a blade profile for a pitch-controlled aerodynamic blade,
wherein said wind turbine is operable to generate nominal output power at WS1 when said outer blade sections are unpitched relative to said inner blade sections,
wherein said inner blade sections are designed to enter stall at a second wind speed greater than or approximately equal to WS2,
wherein the wind turbine further comprises a controller operable to reduce the power capture of said outer blade sections for wind speeds above WS1, to reduce the root moments at the root ends of said partial pitch blades,
wherein said inner blade sections (110a) are operable to provide increasing power capture for wind speeds between WS1 and WS2 to maintain nominal output power, and
wherein said inner blade section comprises a first, second and third region, said first region designed to enter stall at said second wind speed WS2, said second region designed to enter stall at a third wind speed WS2a, and said third region designed to enter stall at a fourth wind speed WS2b, and wherein:WS2 < WS2a < WS2b.

In particular having an inner blade section, which has a staggered entry into stall allows for a smoother power curve of the inner section, and provides for more predictable operation of the wind turbine blade.

Alternatively the object of the invention is according to a partial pitch wind turbine for generating a nominal output power for wind speeds above a first nominal wind speed WS1, the wind turbine comprising:
a wind turbine tower;
a nacelle provided at the top of said tower;
a rotor hub rotatably mounted at said nacelle; and
at least two partial pitch rotor blades of at least 35 metres length mounted to said rotor hub at the root end of said blades, said rotor blades comprising an inner blade section mounted to said rotor hub and an outer blade section pitchable relative to said inner blade section, the inner blade section having a blade profile for a stall-controlled aerodynamic blade and an associated power capture profile, and the outer blade section having a blade profile for a pitch-controlled aerodynamic blade and an associated power capture profile,
wherein said wind turbine is operable to pitch the outer blade sections for wind speeds above WS1 to maintain nominal output power production based on the combined power capture profiles of the inner and outer blade sections.

Preferably, the controller is operable to pitch said outer blade sections out of the wind, to reduce the power capture of said outer blade sections.

Additionally or alternatively, there is also provided a partial pitch wind turbine for generating a nominal output power for wind speeds between a first nominal wind speed WS1 and a second nominal wind speed WS2, where WS2 is greater than WS1, the wind turbine comprising:
a wind turbine tower;
a nacelle provided at the top of said tower;
a rotor hub rotatably mounted at said nacelle; and
at least two partial pitch rotor blades of at least 35 metres length mounted to said rotor hub at the root end of said blades, said rotor blades comprising an inner blade section mounted to said rotor hub and an outer blade section pitchable relative to said inner blade section, the inner blade section having a blade profile for a stall-controlled aerodynamic blade, and the outer blade section having a blade profile for a pitch-controlled aerodynamic blade,
wherein said wind turbine is operable to generate nominal output power at WS1 when said outer blade sections are unpitched relative to said inner blade sections,
wherein said inner blade sections are designed to enter stall at a second wind speed greater than or equal to WS2,
wherein the wind turbine further comprises a controller operable to reduce the power capture of said outer blade sections for wind speeds above WS1, to reduce the root moments at the root ends of said partial pitch blades, and
wherein said inner blade sections are operable to provide increasing power capture for wind speeds between WS1 and WS2 to maintain nominal output power.

The turbine produces nominal output power at a first wind speed WS1, after which the controller operates to reduce the blade root moments for wind speeds above this first wind speed, by reducing the power capture of the outer blade sections. This is in contrast to prior art systems, which seek to keep the power capture of outer blade sections constant, to maintain nominal power output. However, as the inner blade section of the present invention operates with continually increasing power production up to the second wind speed WS2, this allows for the nominal power output to be maintained for wind speeds between WS1 and WS2. Preferably, the power capture of the outer blade sections is reduced at a rate substantially equivalent to the rate of increase of the power capture of the inner blade sections.

As the power capture of the outer blade sections is reduced, therefore the forces generated in the outer blade sections are also reduced. While the turbine still produces nominal output power, a greater proportion of the power generated is produced by the inner blade sections. Accordingly, as the moment arm of the forces generated by the inner blade section is smaller than the moment arm for forces of the outer blade section, the blade root moment for the wind turbine blades is reduced for wind speeds between WS1 and WS2.

It will be understood that the controller may comprise a self-contained control module present in the wind turbine structure at the location of the wind turbine, or may comprise a communications link to a remote control centre, operable to instruct the controller of the wind turbine to reduce the power capture of said outer blade sections for wind speeds above WS1.

Typically, wind turbines have a maximum rated wind speed which is the upper wind speed limit for that turbine for the production of nominal or rated output power. Preferably, WS2 is greater than or equal to the maximum rated wind speed for the present wind turbine. Most preferably, the region between WS1 and WS2 is the range of wind speeds for which the wind turbine is rated to produce nominal output power, wherein WS2 is equal to the maximum rated wind speed for the turbine. However, it will be understood that WS2 may be selected as a wind speed level below the upper maximum rated wind speed. In this case, the controller may be operable to increase the power capture of the outer blade sections for wind speeds between WS2 and the maximum rated wind speed, in order to maintain nominal output power.

Preferably, the wind turbine is designed such that wind speeds between WS1 and WS2 (or a wind speed below WS2) are the dominant wind speeds for the turbine location, i.e. the most common wind speeds to be found at that location. This may be categorised by the IEC wind turbine classes. Designing the wind turbines in this manner maximises the possibility that the turbine will operate at nominal output power.

Preferably, said controller is operable to pitch said outer blade sections out of the wind, to reduce the power capture of said outer blade sections.

Pitching the outer blade sections out of the wind effectively reduces the power production of the outer blade sections, by reducing the lift force generated by the outer blade sections.

Preferably, said controller is further operable to stop the wind turbine when wind speeds exceed an upper limit wind speed WS3, wherein WS3 is greater than WS2.

The turbine is designed with a maximum allowable wind speed, WS3, which is preferably above the maximum rated wind speed of the turbine. Accordingly, the turbine may be de-rated between the maximum rated wind speed and WS3, in order to increase the overall power production of the turbine, while reducing the possibility of damaging the turbine due to high wind speeds.

Preferably, said controller is operable to reduce the output power of the wind turbine as wind speed increases from WS2 to WS3.

The controller is operable to de-rate the turbine operation for wind speeds between WS2 and WS3, preferably between the maximum rated wind speed of the turbine (i.e. the maximum wind speed at which the turbine produces nominal output power) and the maximum allowable wind speed (i.e. the maximum wind speed at which the turbine can operate before being shut down).

Preferably, said controller is operable to operate the wind turbine at constant operational speed for wind speeds between WS1 and WS3.

Preferably, said controller is operable to pitch said outer blade sections such that the rate of change of pitch with respect to wind speed is greater for wind speeds between WS2 and WS3 than between WS1 and WS2.

In situations where the inner blade section is designed to enter stall at a wind speed greater than WS2 (and possibly greater than WS3), the inner blade section will operate with continually increasing power capture for wind speeds above WS2 (and possibly up to WS3). In this case, the power capture of the outer blade sections must be reduced at a greater rate for wind speeds above WS2 than for wind speeds between WS1 and WS2, to ensure that the output power of the wind turbine is reduced, and that the turbine is not damaged by the high wind speeds.

It will be understood that the rate of change of pitch with respect to wind speed of the outer blade section may be selected based on the rate of increased power capture of the inner blade section. In one embodiment, the inner blade section contributes approximately 12% of energy production up to rated power, with the proportion of the total energy produced by the inner blade section steadily rising thereafter. Accordingly, the rate of pitch of the outer blade section for wind speeds between WS1 and WS2 is approximately equal to [(Rate of pitch required to produce constant power from said outer blade section) + (Rate of increase of power produced by inner blade section)]. (In this case, the rate of increase of power produced by the inner blade section may be of the order of 12% - 20%.)

Preferably, the surface area of said outer blade section is substantially equal to the surface area of said inner blade section.

Preferably, said inner blade section is approximately 1/3 of the length of said partial pitch rotor blade.

Preferably, said inner blade section is approximately 20 metres in length, and said outer blade section is approximately 40 metres in length.

Preferably, said inner blade section comprises a first, second and third region, said first region designed to enter stall at said second wind speed WS2, said second region designed to enter stall at a third wind speed WS2a, and said third region designed to enter stall at a fourth wind speed WS2b, and wherein:

WS2 < WS2a < WS2b.

The provision of an inner blade section which has a staggered entry into stall allows for a smoother power curve of the inner section, and provides for more predictable operation of the wind turbine blade.

Preferably, said inner blade section comprises a first, second and third region, wherein said first region is designed to enter stall for an effective angle of attack of 20°, said second region is designed to enter stall for an effective angle of attack of 25°, and said third region is designed to enter stall for an effective angle of attack of 30°.

Preferably, said outer blade sections are coupled to said inner blade sections at a pitch junction of said partial pitch rotor blades, wherein
said inner blade section has a first aerodynamic profile having a first maximum lift coefficient (CLmax1) and a first chord (Ch1) at said pitch junction, and
said outer blade section has a second aerodynamic profile having a second maximum lift coefficient (CLmax2) and a second chord (Ch2) at said pitch junction, and wherein
[(CLmax1) x (Ch1)] is at least 20% greater than [(CLmax2) x (Ch2)].

As [(CLmax) x (Chord)] is proportional to the lift force produced by the blade section, and consequently the energy produced by that section, the use of blade sections having such different profiles means that the outer blade section is able to perform lower work (i.e. power production) at higher speeds, as the nominal power can be largely produced by the inner section. The transition of power production from the outer section to the inner section for wind speeds above WS1 means that the magnitude of the moment arm for the blade is reduced (due to more of the lift being generated closer to the root of the blade), resulting in reduced blade root moments and fatigue loads in the greater wind turbine structure.

There is also provided a method for reducing fatigue loads in a partial pitch wind turbine while generating a nominal output power for wind speeds above a first nominal wind speed WS1, the wind turbine comprising at least two partial pitch blades having an inner blade section and an outer blade section pitchable relative to said inner blade section, the inner blade section having a blade profile for a stall-controlled aerodynamic blade and an associated power capture profile, and the outer blade section having a blade profile for a pitch-controlled aerodynamic blade and an associated power capture profile, the method comprising the steps of:
for wind speeds below nominal wind speed WS1 at which the wind turbine first produces nominal output power, operating said partial pitch wind turbine blades in continuously increasing power capture mode; and
for wind speeds above WS1, pitching said outer blade sections to maintain nominal output power production based on the combined power capture profiles of the inner and outer blade sections.

Preferably, the method comprises the step of pitching said outer blade sections out of the wind, to reduce the power capture of said outer blade sections.

Additionally or alternatively, there is also provided a method for reducing fatigue loads in a partial pitch wind turbine while generating a nominal output power for wind speeds between a first nominal wind speed WS1 and a second nominal wind speed WS2, where WS2 is greater than WS1, the wind turbine comprising at least two partial pitch blades having an inner blade section and an outer blade section pitchable relative to said inner blade section, the inner blade section having a blade profile for a stall-controlled aerodynamic blade, and the outer blade section having a blade profile for a pitch-controlled aerodynamic blade, said inner blade section designed to stall at a wind speed greater than or equal to WS2, the method comprising the steps of:
for wind speeds below nominal wind speed WS1 at which the wind turbine first produces nominal output power, operating said partial pitch wind turbine blades in continuously increasing power capture mode; and
for wind speeds above WS1, de-rating said outer blade sections to reduce the power capture of said outer blade sections, to reduce the root moment of said partial pitch rotor blades, wherein nominal output power between WS1 and WS2 is maintained by the continuously increasing power capture of said inner blade sections.

As the power capture or power production of the outer blade sections is reduced for wind speeds above WS1 (and not maintained at a constant level, as in the prior art), the root moments of the wind turbine blades can be reduced. At the same time, the continually increasing power capture or production of the inner blade sections for wind speeds above WS1 means that nominal output power of the wind turbine can be maintained.

Preferably, said step of de-rating comprises pitching said outer blade sections out of the wind to reduce the power capture of said outer blade sections, and/or reducing the operating speed of the wind turbine.

Preferably, the method further comprises the step of stopping the wind turbine when wind speeds exceed an upper limit wind speed WS3, wherein WS3 is greater than WS2.

Preferably, the method further comprises the step of reducing the output power of the wind turbine as wind speed increases from WS2 to WS3.

Preferably, said pitching is arranged such that the rate of change of pitch with respect to wind speed between WS2 and WS3 is greater than the rate of change of pitch with respect to wind speed between WS1 and WS2.

Preferably, the method further comprises the step of operating said wind turbine at a constant rpm for wind speeds between WS1 and WS3.

Preferably, the method further comprises the step of:
for wind speeds below WS1, substantially maintaining said outer blade section at a pitch angle of approximately 0° relative to said inner blade section.

In wind turbine operation, it may be necessary to pitch the outer blade sections positively into the wind in order to initiate the wind turbine rotation. Once the turbine is started, the outer blade sections are returned to an unpitched state until rated power output is reached at WS1.

### Description of the Invention

Embodiments of the invention will now be described, by way of example only, with reference to the accompanying drawings, in which:
Fig. 1 is a perspective view of a partial pitch wind turbine according to the invention;
Fig. 2 is a plan view of a partial pitch rotor blade for use with the turbine of Fig. 1;
Fig. 3 is a cross-sectional view of an example of a stall-controlled blade profile;
Fig. 4 is cross-sectional view of an example of a pitch-controlled blade profile;
Fig. 5 is an enlarged cross-sectional perspective view of a pitch junction of a partial pitch rotor blade according to an embodiment of the invention; and
Fig. 6 illustrates a series of power curves for the wind turbine of Fig. 1 during operation of the invention.

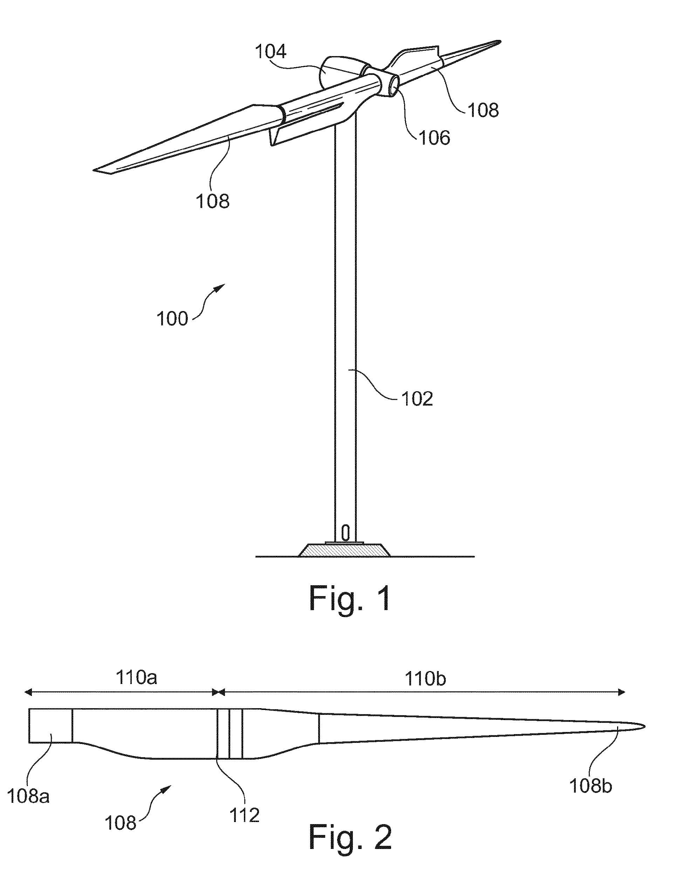

With reference to Figs. 1 and 2, a wind turbine according to the invention is indicated generally at 100. The wind turbine 100 comprises a wind turbine tower 102, a nacelle 104 provided at the top of said tower 102, and a rotor hub 106 provided at said nacelle 104. A pair of partial pitch rotor blades 108 are provided on said rotor hub 106.

With reference to Fig. 2, the rotor blades 108 comprise a blade body having a root end 108a mounted to said rotor hub 106 and a distal tip end 108b. The rotor blades 108 comprise an inner blade section 110a provided at said root end 108a, and an outer blade section 110b provided at said tip end 108b. The rotor blades 108 further comprise a pitch system 112 provided at the junction between the inner blade section 110a and the outer blade section 110b. The pitch system 112 is operable to pitch the outer blade section 110b relative to the inner blade section 110a.

The inner blade section 110a and the outer blade section 110b are designed to have different and distinct blade aerodynamic profiles, such that the blade sections may operate in a different manner and have different power curve characteristics.

In the system of the invention, the inner blade section 110a is designed as a stall-controlled blade, while the outer blade section 110b is designed as a pitch-controlled blade. This means that the inner blade section 110a is aerodynamically designed to operate at a large range of angles of attack, and is designed to enter stall when the wind speed at the blade becomes too high. (Turbulence generated by the stall-controlled section will prevent the lifting force acting on the rotor.)

As the outer blade section 110b is designed as a pitch-controlled blade, the aerodynamic design can be optimised for operation within a short range of angles of attack. Such operation may be controlled by a controller module (not shown) present at the turbine location, or the turbine operation may be remotely controlled by a control centre.

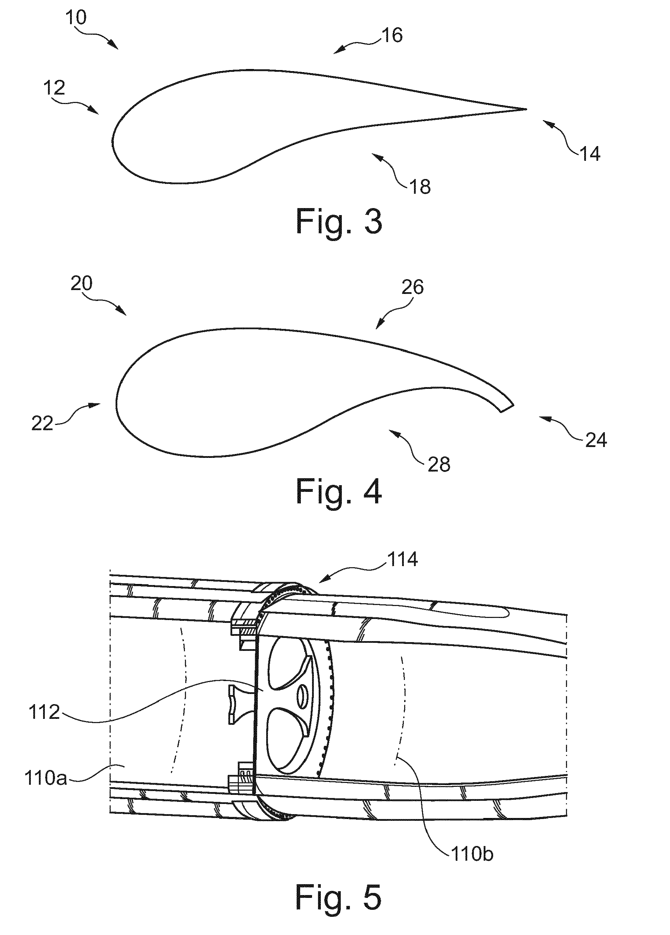

Fig. 3 shows an example of a sample airfoil profile indicated at 10, suitable for use in a stall-controlled blade profile. The profile comprises a leading edge 12, a trailing edge 14, an upper suction side 16 and a lower pressure side 18. A stall-controlled blade has a relatively slight camber (or curvature), with an emphasis on providing a smooth post-stall power curve. Stall-controlled blades have a relatively high maximum lift coefficient (CLmax), and are designed to operate with reasonable efficiency across a relatively wind range of wind speeds and associated angles of attack.

Examples of suitable stall-controlled blade profiles include, but are not limited to, NACA-63-2XX series blade profiles.

Fig. 4 shows an example of a sample airfoil profile indicated at 20, suitable for use in a pitch-controlled blade profile. The profile comprises a leading edge 22, a trailing edge 24, an upper suction side 26 and a lower pressure side 28. A pitch-controlled blade has a relatively large camber (or curvature), and is optimised for high-efficiency operation within a short range of angles of attack.

Examples of suitable pitch-controlled blade profiles include, but are not limited to, NACA-63-6XX series blade profiles.

The energy production of a blade section is proportional to the product of the maximum lift coefficient (CLmax) of the blade section and the length of the chord at the blade section (the chord being the imaginary straight line joining the trailing edge and the centre of curvature of the leading edge of the cross-section of an airfoil). Preferably, the blade profiles of the inner and outer blade sections are selected such that the value of the [(CLmax) x (Chord)] for the inner blade section at the pitch junction is at least 20% greater than the [(CLmax) x (Chord)] of the outer blade section.

This discontinuity in the [(CLmax) x (Chord)] values of the two blade sections provides for a blade configuration which is adapted for use with the above method, wherein the inner blade section continues to produce increasing lift (and therefore increasing power generation) as wind speed increases beyond WS1. The [(CLmax) x (Chord)] variation aims to ensure that stall of the inner blade sections is delayed for as long as possible, in order to provide for increasing power production of the inner blade sections for substantially all of the nominal power output wind speed range.

With reference to Fig. 5, an enlarged cross-sectional view of the pitch junction of a rotor blade of the invention is illustrated. In the embodiment of Fig. 5, a discontinuity or jump (indicated at 114) is seen between the end of the inner blade section 110a and the end of the outer blade section 110b, indicating the relative change in the blade profiles for each section. It will be understood that other variations of blade profiles may be used, for example longer chord length, increased camber, etc.

Additionally or alternatively, at least one high-lift device can be provided on the inner blade section to increase the lift characteristics and postpone the stall of the inner blade section. Examples of suitable high-lift devices include, but are not limited to: a vortex generator, a gurney flap, a spoiler, a leading-edge slat/slot, boundary-layer control devices.

As the inner blade section 110a is designed to have relatively stable performance, and only enters stall at a relatively high wind speed, it operates with a continuously increasing power capture until reaching the stall speed of the inner blade section 110a (i.e. as wind speed increases the power produced by the inner blade section 110a also increases, up to the stall point of the section). In general, wind turbines will have a nominal operating region, i.e. a range of wind speeds at the turbine which will result in nominal or rated power output.

Preferably, the wind turbine 100 is designed such that the wind turbine 100 will produce nominal or rated power output at a first wind speed when the outer blade section 110b is unpitched, and furthermore that the stall point of the inner blade section 110a is located at a wind speed at the upper end of the nominal operating region (or above the upper end of the nominal operating region). Accordingly, the operation of the wind turbine 100 can be appropriately controlled to reduce the effect of wind loads in the turbine structure, while providing for optimum power output.

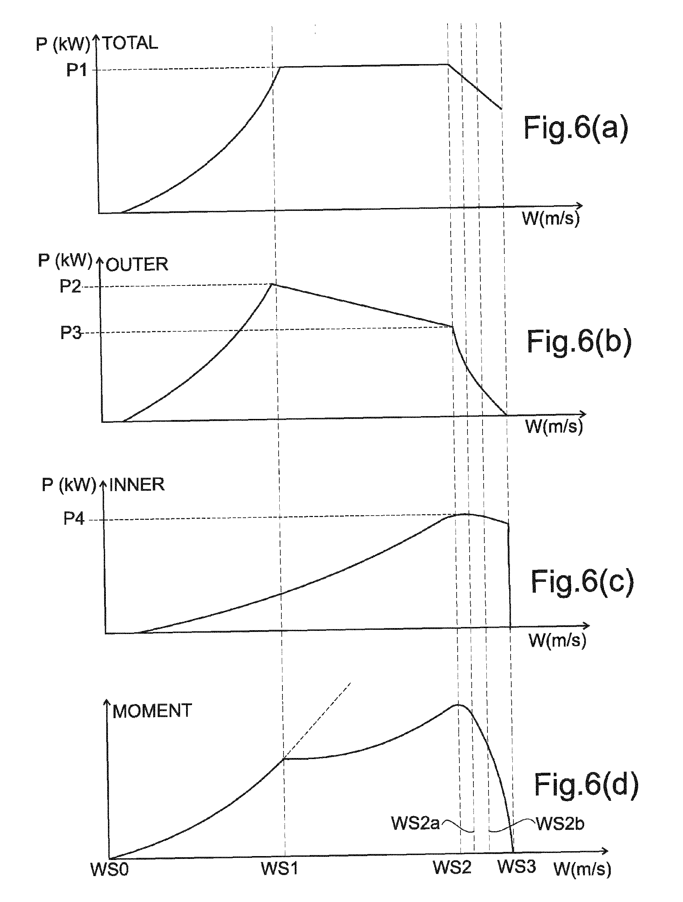

Fig. 6(a) shows a sample power curve for a wind turbine operated according to the invention, illustrating the output power generated by the wind turbine against the wind speed at the wind turbine. To clearly illustrate what is happening in the different sections of the wind turbine blades, Fig. 6(b) illustrates the corresponding output power produced by the outer blade sections against wind speed, and Fig. 6(c) illustrates the corresponding output power produced by the inner blade sections against wind speed. The total output power of Fig. 6(a) is produced from the sum of the power produced by the inner and outer blade sections, as seen in Figs. 6(b) and (c). (Graphs shown are not to scale.)

For wind speeds below a first wind speed value WS1, the wind turbine is operated with the outer blade sections substantially unpitched (i.e. with a pitch angle of 0 degrees relative to the inner blade sections). It will be understood however that the outer blade sections may be pitched slightly positively for low wind speeds, in order to generate lift to start turbine rotation.

As can be seen from Figs. 6(b) and (c), for wind speeds between 0 and WS1 both the inner and outer blade sections operate with continually increasing power capture, i.e. both blade sections continue to produce more output power as the wind speed increases. As can be seen from the relatively steep slope of Fig. 6(b), the outer blade sections produce comparatively more output power for these speeds than the inner blade sections, illustrating the comparatively better efficiency of the outer blade sections than the inner blade sections. The power capture of the inner and outer sections is summed to provide the increasing power output of the turbine as seen in Fig. 6(a).

At WS1, the turbine produces the nominal or rated output power of the turbine P1. At this point, the turbine starts to pitch the outer blade sections out of the wind to reduce the power capture of the outer blade sections from a power level of P2, reducing in a declining power curve in Fig. 6(b) seen between WS1 and a second wind speed WS2.

As the inner blade sections continue to operate with increasing power capture for wind speeds above WS1, the total output power of the wind turbine can be maintained at the nominal output power level P1 for wind speeds between WS1 and WS2. This is accomplished by ensuring that the rate of pitching of the outer blade sections results in the output power level for the outer blade sections decreasing for increasing wind speed, at a rate corresponding to the rate of increase of output power from the inner blade sections for the same wind speed interval.

While the efficiency of the energy production of the blades is important for relatively low wind speeds (i.e. wind speeds below nominal wind speed), blade efficiency is less important for wind speeds above the nominal wind speed at which nominal output power is first produced, as nominal output power has already been reached. Accordingly, it is possible to move output power production from the relatively high-efficiency (but high moment arm) outer blade sections to the relatively low-efficiency (but low moment arm) inner blade sections. This results in lower blade moments experienced by the wind turbine structure at the root of the blades. Consequently the wind turbine structures may be designed to take into account such reduced blade moments and fatigue loads, resulting in savings in construction materials, load specifications, etc.

Fig. 6(d) is an illustration of an example of a total moment at the root end of a blade for a blade according to the invention (the solid line) in comparison to the total moment at the root at the end of a blade according to an embodiment of the prior art (the dotted line). The cures are not to scale and only indicative of the effect on the moment at the root of a blade.

Such a procedure is in contrast to prior art systems, wherein the wind turbine pitches the outer blade sections of a partial pitch turbine to maintain the same level of output power from the outer sections, and thereby producing the same blade root moments and fatigue loads in the turbine for all wind speeds at nominal power output.

In the present invention, the outer blade sections continue to be pitched out of the wind as the wind speed increases up to a second wind speed WS2, which is the maximum rated wind speed of the turbine. This is the upper limit of wind speed that the turbine is designed to operate at when producing rated power P1. For wind speeds above WS2, the turbine undergoes a de-rating operation, wherein the turbine output is decreased, until the wind speed reaches a maximum allowable wind speed, WS3, at which point the turbine is stopped.

For the de-rating operation above WS2, the outer blade sections of the wind turbine blades are pitched at a greater rate than the rate of pitch for the region between WS1 and WS2. Accordingly, due to the increased drop-off in power production from the outer blade sections power level of P3, the total output power of the turbine starts to fall from the nominal level P1. As the wind speed increases beyond the maximum allowable wind speed for the turbine WS3, the turbine is stopped to prevent any damage to the turbine structure.

In the embodiment shown in Fig. 6(c), the inner blade section is shown as entering stall at a wind speed approximately equal to WS2, at a power level of P4, and it will be understood that the inner blade sections are designed such that the stall-controlled inner blade sections will preferably not enter stall for wind speeds below WS2, and most preferably will not enter stall below WS3. For a turbine wherein the inner blade sections stall at a wind speed greater than or equal to WS3, as the power capture of the inner blade sections is continually increasing for all operational wind speed of the turbine, this means that the load reduction of the turbine can be optimised due to the continual reduction in the power capture (and associated moment arms) of the outer blade sections for all operational wind speeds.

As the wind turbine is allowed to operate at a de-rated level between WS2 and WS3, this means that if the wind speed exceeds WS2, but proceeds to drop below the maximum rated wind speed WS2 without exceeding the maximum allowable wind speed WS3, the wind turbine can be relatively easily returned to nominal power production, without requiring initialisation of the turbine and slow ramping up to nominal power. Furthermore, as the turbine is permitted to operate over a wider range of air speeds, the overall total power production of the turbine is increased, leading to a more efficient and productive turbine design. Also, as the power capture of the outer blade sections is reduced even further in the region between WS2 and WS3, the blade root moments are minimised for the turbine, resulting in minimised fatigue loads for the wind speeds in excess of WS2.

Preferably, said inner blade sections are designed to enter stall at a second wind speed greater than or equal to WS2. However, it will be understood that the blade aerodynamic characteristics may change during the operational lifetime of the blades, e.g. due to accumulation of dirt, rain and/or erosion. Accordingly, it will be understood that, depending on circumstances, said inner blade sections may enter into stall at a wind speed slightly below WS2, in which case it can be said that the inner blade sections enter stall at a wind speed approximately equal to WS2. For example, the stall point may be within 5-10% of WS2.

In cases where the inner blade sections may enter stall at a wind speed below WS2, it will be understood that that the direction of pitch of the outer blade sections may be reversed, such that the outer sections experience increasing power capture once again. Accordingly, the outer blade sections may be pitched to ensure that nominal output power P1 is maintained for the turbine.

It will be understood that, for wind speeds between WS1 and WS2, the rate of change of pitch with respect to wind speed of the outer blade section may be selected based on the rate of increased power capture of the inner blade section. For example, in the case of a partial pitch wind turbine having an inner blade section of approximately 20 metres length and an outer blade section of approximately 40 metres length, the swept area of the outer blade section is approximately 10,052 m², and the swept area of the inner blade section is approximately 1,257 m². As the lift force generated is proportional to the swept area of the blades, accordingly the inner blade section will contribute approximately 12% of the energy production up to rated power.

While in prior art pitch turbines, for rated wind speed the pitch angle decreases 1 degree for each m/s increase in wind speed in order to maintain rated power. By contrast, in an embodiment of the present invention, the rate of pitch of the outer blade sections is approximately (1 degree + (12% - 20%)) for each m/s increase in wind speed.

It will be understood that the wind turbine blades may have any suitable dimensions, but preferably, for each blade, the surface area of the outer blade section is substantially equal to the surface area of the inner blade section. Further preferably, the inner blade section is approximately 1/3 of the length of the partial pitch rotor blade. This provides several advantages in terms of manufacturing, transportation, etc. For example, in one embodiment, the inner blade section is approximately 20 metres in length, and the outer blade section is approximately 40 metres in length.

The inner blade section may be designed to have a staggered stall characteristic, e.g. different sections of the blade may be designed to enter stall at different wind speeds (i.e. at different angles of attack). For example, the blade may have three separate regions, the regions entering stall for effective angles of attack of 20 degrees, 25 degrees and 30 degrees respectively.

While the turbine shown in Fig. 1 is illustrated as an on-shore turbine, it will be understood that the invention equally applies to turbines located in off-shore environments. Furthermore, it will be understood that the invention may be used for any suitable wind turbine configuration having more than two partial pitch blades.

The invention is particularly suited for use in two-bladed partial pitch wind turbines, which experience more problems with yaw loads and nodding loads. Accordingly, as the present invention acts to reduce the loads experienced due to blade root moments, the associated yaw and nodding loads may also be reduced.

The invention is not limited to the embodiment described herein, and may be modified or adapted without departing from the scope of the present invention.

## Claims

1. A partial pitch wind turbine (100) for generating a nominal output power for wind speeds above a first nominal wind speed WS1, the wind turbine (100) comprising:
a wind turbine tower (102);
a nacelle (104) provided at the top of said tower (102);
a rotor hub (106) rotatably mounted at said nacelle (104); and
at least two partial pitch rotor blades (108) of at least 35 metres length mounted to said rotor hub (106) at the root end of said blades (108), said rotor blades (108) comprising an inner blade section (110a) mounted to said rotor hub (106) and an outer blade section (110b) pitchable relative to said inner blade section (110a), the inner blade section (110a) having a blade profile for a stall-controlled aerodynamic blade and an associated power capture profile, and the outer blade section (110b) having a blade profile for a pitch-controlled aerodynamic blade and an associated power capture profile,
wherein said wind turbine (100) is operable to generate nominal output power at WS1 when said outer blade sections (110b) are unpitched relative to said inner blade sections (110a),
wherein the wind turbine (100) further comprises a controller operable to pitch said outer blade sections (110b) out of the wind to reduce the power capture of said outer blade sections (110b) for wind speeds above WS1, to reduce the rate of increase or the root moments at the root end of said partial pitch blades (108),

2. A partial pitch wind turbine (100) according to claim 1, wherein said inner blade sections (110a) are designed to enter stall at a second wind speed greater than or approximately equal to WS2, which is greater than WS1 and said inner blade sections (110a) are operable to provide increasing power capture for increasing wind speeds between WS1 and WS2.

3. A partial pitch wind turbine (100) according to claim 1 or claim 2 wherein said inner blade sections (110a) are designed to enter stall at a second wind speed greater than or approximately equal to WS2,
wherein the wind turbine (100) further comprises a controller operable to reduce the power capture of said outer blade sections (110b) for wind speeds above WS1, to reduce the root moments at the root end of said partial pitch blades (108),
wherein said inner blade sections (110a) are operable to provide increasing power capture for wind speeds between WS1 and WS2 to maintain nominal output power, and
wherein said inner blade section (110a) comprises a first, second and third region, said first region designed to enter stall at said second wind speed WS2, said second region designed to enter stall at a third wind speed WS2a, and said third region designed to enter stall at a fourth wind speed WS2b, and wherein:
WS2 < WS2a < WS2b.

4. A partial pitch wind turbine (100) of any one of claims 1 to 3, wherein said controller is further operable to stop the wind turbine (100) when wind speeds exceed an upper limit wind speed WS3, wherein WS3 is greater than WS2.

5. A partial pitch wind turbine (100) of claim 4, wherein said controller is operable to reduce the output power of the wind turbine (100) as wind speed increases from WS2 to WS3.

6. A partial pitch wind turbine (100) of claim 4 or claim 5, wherein said controller is operable to operate the wind turbine (100) at constant operational speed for wind speeds between WS1 and WS3.

7. A partial pitch wind turbine (100) of any one of claims 4 to 6, wherein said controller is operable to pitch said outer blade sections (110b) such that the rate of change of pitch with respect to wind speed is greater for wind speeds between WS2 and WS3 than between WS1 and WS2.

8. A partial pitch wind turbine (100) of any preceding claim, wherein the surface area of said outer blade section (110b) is substantially equal to the surface area of said inner blade section (110a).

9. A partial pitch wind turbine (100) of any preceding claim, wherein said inner blade section (110a) is approximately 1/3 of the length of said partial pitch rotor blade (108).

10. A partial pitch wind turbine (100) of any preceding claim, wherein said outer blade sections (110b) are coupled to said inner blade sections (110a) at a pitch junction of said partial pitch rotor blades (108), wherein
said inner blade section (110a) has a first aerodynamic profile having a first maximum lift coefficient (CLmax1) and a first chord (Ch1) at said pitch junction, and
said outer blade section (110b) has a second aerodynamic profile having a second maximum lift coefficient (CLmax2) and a second chord (Ch2) at said pitch junction, and wherein
[(CLmax1) x (Ch1)] is at least 20% greater than [(CLmax2) x (Ch2)].

11. A method for reducing fatigue loads in a partial pitch wind turbine (100), the wind turbine (100) comprising at least two partial pitch blades (108) having an inner blade section (110a) and an outer blade section (110b) pitchable relative to said inner blade section (110a), the inner blade section (110a) having a blade profile for a stall-controlled aerodynamic blade and an associated power capture profile designed to stall at a wind speed greater than or approximately equal to WS2,, and the outer blade section (110b) having a blade profile for a pitch-controlled aerodynamic blade and an associated power capture profile, the method comprising the steps of:
Ws < WS1: for wind speeds below nominal wind speed WS1 at which the wind turbine (100) first produces nominal output power, operating said partial pitch wind turbine blades (108) in continuously increasing power capture mode; and
Ws>WS1: for wind speeds above WS1 operating said partial pitch wind turbines blades (108) to pitch said outer blade sections (110b) out of the wind to reduce the power capture of said outer blade sections (110b), to reduce the rate of increase or the root moments at the root end of said partial pitch blades (108).

12. The method of claim 11 operating said partial pitch wind turbine (100):
Ws>WS1<WS2: for wind speeds between a first nominal wind speed WS1 and a second nominal wind speed WS2, where WS2 is greater than WS1, de-rating said outer blade sections (110b) to reduce the power capture of said outer blade sections (110b), to reduce the root moment of said partial pitch rotor blades (108), wherein nominal output power between WS1 and WS2 is maintained by the continuously increasing power capture of said inner blade sections (110a);
Ws<WS3>WS2: the step of reducing the output power of the wind turbine (100) as wind speed increases from WS2 to WS3;
Ws>WS3>WS2: step of stopping the wind turbine (100) when wind speeds exceed an upper limit wind speed WS3, wherein WS3 is greater than WS2

13. The method of claim 12 operating said partial pitch wind turbine (100) for wind speeds above the nominal wind speed WS1 to substantially maintain nominal output power production based on the combined power capture profiles of the inner and outer blade sections (110a, 110b), and preferably operating said wind turbine (100) at constant rpm for wind speeds.

14. The method of any of claim 11 to claim 13, the method comprising the step of pitching said outer blade sections (110b) out of the wind, to reduce the power capture of said outer blade sections (110b).

15. The method of any claim 11 to claim 14, wherein said pitching is arranged such that the rate of change of pitch with respect to wind speed between WS2 and WS3 is greater than the rate of change of pitch with respect to wind speed between WS1 and WS2.
